# EUROPEAN PATENT SPECIFICATION

(11) **EP 0 562 158 B1**
(45) Date of publication and mention of the grant of the patent: **20.05.1998**
(21) Application number: 92117940.4
(22) Date of filing: 20.10.1992
(51) Int. Cl.: G11B 7/09, G11B 7/13, G11B 7/14

(54) **Tracking error detecting system**
Spurfolgefehlerdetektionssystem
Système de détection des erreurs de suivi de piste

(30) Priority: 26.03.1992 JP 100448/92
(43) Date of publication of application: 29.09.1993
(73) Proprietor: PIONEER ELECTRONIC CORPORATION, Meguro-ku Tokyo (JP)
(72) Inventor: Akiyama, Toru, c/o Tokorozawa Koujou, Tokorozawa-shi, Saitama-ken (JP)
(74) Representative: Bohnenberger, Johannes, Dr.

(56) References cited:
- EP-A- 0 468 468
- WO-A-90/08381
- US-A- 4 617 654
- PATENT ABSTRACTS OF JAPAN vol. 10, no. 212 (P-480)(2268) 24 July 1986
- PATENT ABSTRACTS OF JAPAN vol. 10, no. 225 (P-484)(2281) 6 August 1986
- PATENT ABSTRACTS OF JAPAN vol. 13, no. 269 (P-888)21 June 1989
- SIGNAL PROCESSING OF HDTV, II, PROCEEDINGS OF THE THIRD INTERNATIONAL WORKSHOP ON HDTV 30 August 1989, TURIN, ITALY pages 519 - 526 H. SAEKI ET AL 'optical video disc system for HDTV'

## Description

The present invention relates to a tracking error detecting system for a videodisc player wherein a plurality of tracks are simultaneously reproduced.

There has been proposed a high-definition videodisc (HDVD) in which a high-definition picture is recorded. Since the HDVD uses a large spectrum space which is four times as much as the conventional NTSC format videodiscs, the video signal is divided into a plurality of components which are recorded in different tracks of the disc. The high-definition video signal is obtained by simultaneously reading each track and synthesizing the signals reproduced from the tracks.

Japanese Patent Application 2-143589 filed by the applicant of the present invention discloses a three-track recording and reproducing system where the high-definition signal is divided into three channels and recorded in three tracks of recording medium.

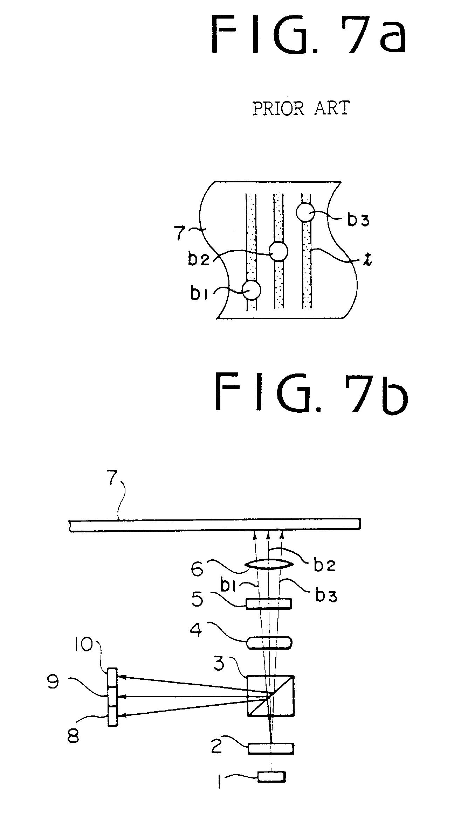

Referring to Figs. 7a and 7b, the system has a semiconductor laser device 1 which emits a laser beam. The laser beam is split into three beams b1 to b3 by a grating 2 and each beam is focused on a track t of a videodisc 7 through a beam splitter 3, collimator lens 4, quarter-wave plate 5 and an objective 6. The three beams reflected from the videodisc 7 reflects on the beam splitter 3 and received by detecting areas of three photodetectors 8, 9 and 10. A reproduced RF signal is obtained from the outputs of the photodetector 8, 9 and 10.

The tracks on the disc 7 are deviated due to a warp of the disc. In order to properly centralize the laser beams on the tracks, there is provided a track-following servo system where a tracking error signal which represents the deflections of the beams from the tracks is obtained from the output signals of the photodetectors 8, 9 and 10. The objective 6 is moved in accordance with the tracking error signal.

One of the methods for obtaining the tracking error signal is a push-pull method. The push-pull method uses beams split by diffraction.

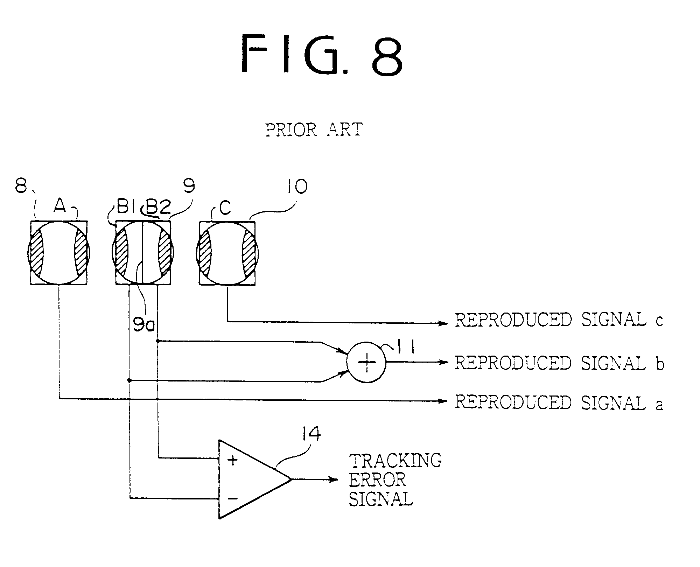

Referring to Fig. 8, the central first photodetector 9 has two detector elements B1 and B2 divided by a center line 9a. The second and third photodetectors have detector elements A and C, respectively. Each beam is diffracted to form a center zeroth-order diffraction beam and, first-order diffraction beams deflected in positive and negative directions from the center zeroth-order diffraction beam. These beams are projected on each of the photodetectors 8, 9 and 10, thereby forming beam spots thereon.

The center beam and the deflected side beams are overlapped as shown by the hatched areas in each of the photodetectors 8, 9 and 10. when the laser beams are properly centralized on respective tracks, the hatched areas on each detector element of the first photodetector 9 are equally distributed. On the other hand, if the tracking is off-center, the reflected beams are asymmetrically diffracted. As a result, the outputs of detector elements B1 and B2 of the first photodetector 9 are different from each other. The outputs are applied to a subtracter 14 wherein the difference thereof is calculated to obtain the tracking error signal. The objective 6 is moved to the right or the left until the output of the subtracter 14 becomes zero.

The detector elements A and C produces RF signals a and c, respectively. The outputs of the detector elements B1 and B2 of the first photodetector 9 are further applied to an adder 11 to produce an RF signal b.

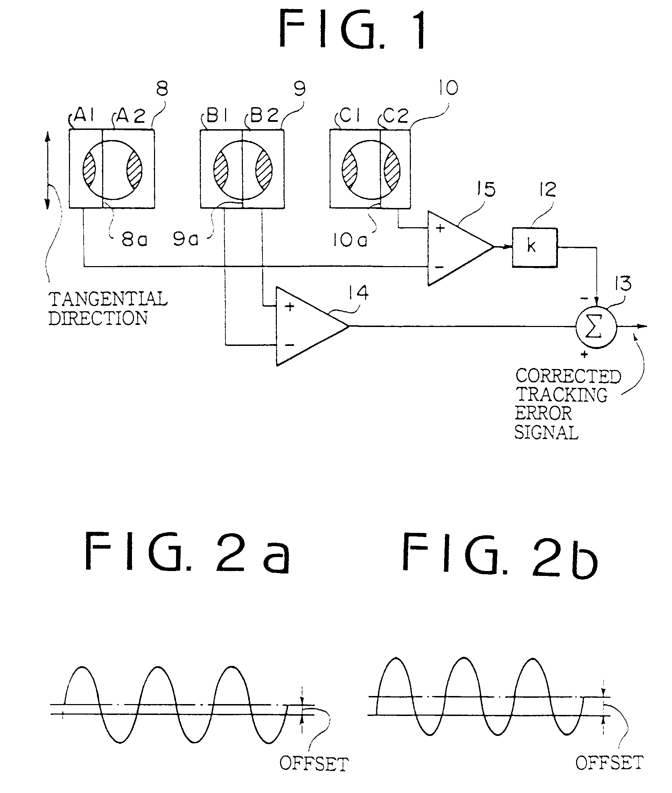

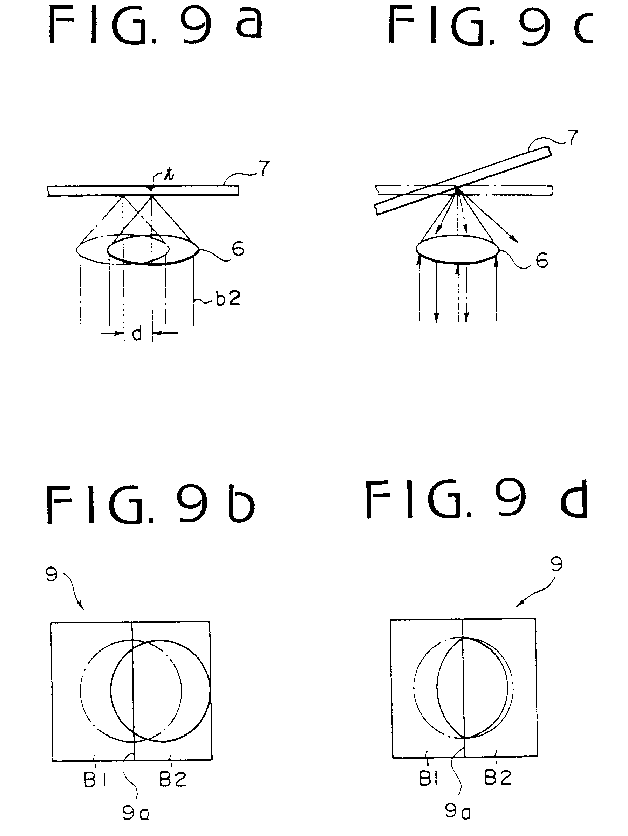

In the push-pull method, the objective is moved as shown by a solid line in Fig. 9a, so as to coincide the center of the laser beam b2 with the track t. The spot of the reflected beam formed on the detector elements B1 and B2 is inevitably deflected in the direction perpendicular to the center line 9a as shown in Fig. 9b. Thus, although the size of the overlapped areas on the detector elements B1 and B2 are equal to each other, there is a difference between the outputs thereof due to the difference in the areas. Hence, a DC offset is caused in the tracking error signal as shown in Fig. 2b. The track-following servo system is operated in accordance with the erroneously offset tracking error signal so that the beams are further deflected from the tracks.

Referring to Figs. 9c and 9d, the videodisc 7 may be warped so that the optical axes of the laser beams are not perpendicular to the recording surface of the videodisc. The spot on the detector elements B1 and B2 is distorted instead of forming a circle, so that the distribution of energy on the detector elements B1 and B2 differs. Hence, a DC offset is also present in the tracking error signal.

An object of the present invention is to provide a tracking error detecting system for a high-definition videodisc player where a plurality of tracks are simultaneously read, wherein a DC offset in a tracking error signal may be eliminated.

According to the present invention, there is provided a tracking error detecting system for a disc player as defined in the claim.

The tracking error detecting system of the present invention is, for example, applied to a high-definition videodisc player where three beams are simultaneously focused on three tracks of a videodisc. The detector elements of the first photodetector receives the entire beam in the spot having an area caused by the zeroth-order diffraction beam and areas caused by overlapping the zeroth-order diffraction beam and the first-order diffraction beams, thereby producing a tracking error signal in accordance with the conventional push-pull method. The small detector element of each of the second photodetector means receives a part of a beam spot comprising mostly of an area caused by overlapping center beam and the deflected beam. The difference between the outputs of the small detector elements are subtracted from the tracking error signal to cancel a DC offset in the tracking error signal.

These and other objects and features of this invention will become understood from the following description with reference to the accompanying drawings.
Fig. 1 is a block diagram of a track-following servo system according to the present invention;
Figs. 2a and 2b show output signals of subtracters provided in the track-following servo system of Fig. 1;
Figs. 5 and 6 are block diagrams of other embodiments of the track-following servo system of the present invention;
Fig. 7a is a plan view showing a part of a HDVD;
Fig. 7b is a schematic diagram of an optical system of a high-definition videodisc player to which the present invention is applied;
Fig. 8 is a block diagram of a conventional track-following servo system; and
Fig. 9a to 9d show deflections of spots.

The present invention is applied to the high-definition videodisc player shown in Fig. 7b. The same references in Figs. 1, 2, 5 and 6 as in Figs. 7b and 8 designate the same parts in Figs. 1 to 6.

Referring to Fig. 1, the first photodetector 9 has the detector elements B1 and B2 which are equally divided by the center line 9a. The second photodetector 8 has detector elements A1 and A2 which are asymmetrically divided by a line 8a, and the third photodetector 10 has detector elements C1 and C2 which are asymmetrically divided by a line 10a. The areas of the detector elements A1 and C2 are provided to be smaller than the areas of the detector elements A2 and C1, respectively.

The outputs of the detector elements B1 and B2 are applied to the inverting terminal and the non-inverting terminal of the subtracter 14 to obtain the difference therebetween.

The output of the detector element A1 is applied to the inverting terminal of a subtracter 15 and the output of the detector element C2 is applied to the non-inverting terminal thereof to obtain the difference therebetween. The difference is multiplied by a predetermined value k at an amplifier 12 and fed to a subtracter 13 to which the output of the subtracter 14 is fed. Namely, a DC offset which is represented by the output of the amplifier 12 is subtracted from the output of the subtracter 14 so that an accurate tracking error signal is provided.

The reproduced RF signal of each track on the videodisc is obtained by adding the output signals of each detector element of each of the photodetectors 8, 9 and 10.

When the laser beams are properly centralized on the tracks, the beam spots are formed on the photodetectors 8, 9 and 10 as shown in Fig. 1. Consequently, the outputs of the detector elements B1 and B2 are equal to each other so that the output of the subtracter 14 is zero. Since the outputs of the detector elements A1 and C2 are also equal to each other, the output of the subtracter 15 is also zero.

If the output of one of the detector elements B1 and B2 becomes larger than that of the other detector element, the subtracter 14 produces an output corresponding to the difference between the intensities of light received by both detector elements B1 and B2. The objective 6 (Fig. 7b) is moved in a direction to reduce the difference. As a result, the spots formed on the first photodetector 9 is moved in the direction perpendicular to the center line 9a, thereby causing a DC offset in the output of the subtracter 14 as shown in Fig. 2b.

The spots on the second and third photodetectors 8 and 10 also moves in the same direction. When the spots are moved to the right, for example, the output of the detector element A1 is decreased and the output of the detector element C2 is increased, thereby producing an output at the subtracter 15 as shown in Fig. 2a. The difference between the outputs of the small detector elements A1 and C2 is multiplied by the predetermined value k and applied to the subtracter 13 so that the difference is subtracted from the output of the subtracter 14. Thus the tracking error signal is corrected.

More particularly, whereas the detector elements B1 and B2 receive all of the beam in the spot including the hatched areas caused by the zeroth-order diffraction beam and the first-order diffraction beam, and the area without the hatchings caused by the zeroth-order diffraction beam, each of the small detector elements A1 and C2 receives a part of the beam spot including mostly the hatched area. Thus, the difference between the outputs of the detector elements A1 and C2, which is smaller than the difference between the outputs of the detector elements B1 and B2, substantially corresponds to the offset in the tracking error signal. By subtracting the difference obtained by the subtracter 15 from the output of the subtracter 14, the offset in the tracking error signal can be restrained.

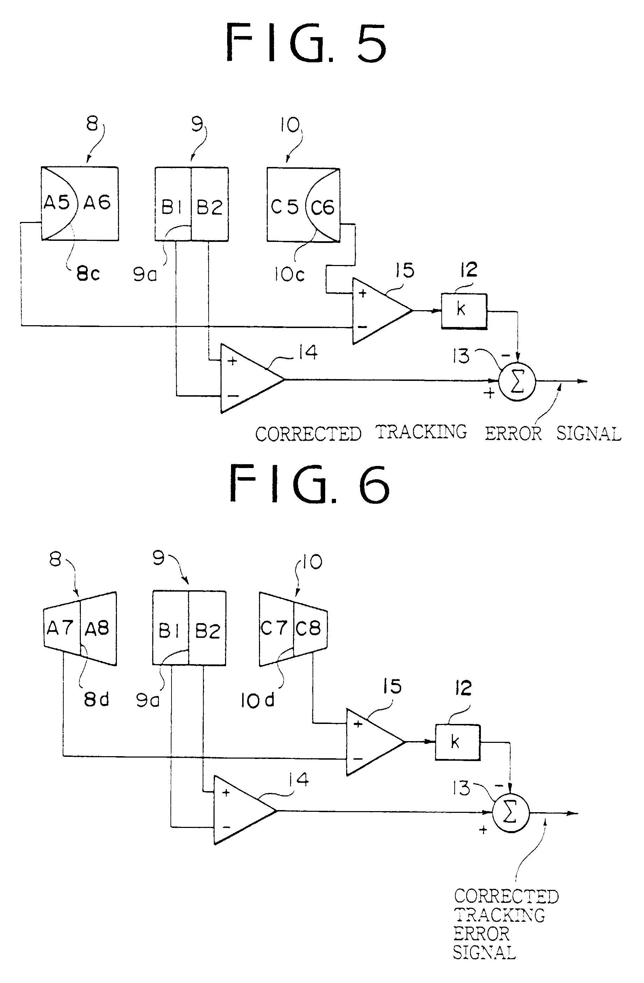

The second embodiment of the present invention shown in Fig. 5 is similar to the first embodiment in that the first photodetector 9 has the detector elements B1 and B2 to produce the tracking error signal. The second photodetector 8 has detector elements A5 and A6 which are defined by a curved line 8c. The detecting area of the detector element A5 is smaller than that of the element A6. Similarly, the third photodetector 10 has detector elements C5 and C6 defined by a curved line 10c, thereby defining the detector element C5 and a smaller detector element C6. Hence, the tracking error signal is corrected.

The second embodiment may be modified as shown in Fig. 6 where each of the second and the third photodetectors 8 and 10 has a trapezoidal shape. The photodetectors 8 and 10 are divided by lines 8d and 10d, thereby forming trapezoidal detector elements A7 and A8, and C7 and C8. The detector elements A7 and C8 are smaller than the detector elements A8 and C7, respectively. The other constructions and operation of the present embodiment are the same as those of the first embodiment.

The present invention may be modified so as to be applied to videodisc players where less than two or more than four tracks are simultaneously read.

From the foregoing, it will be understood that the present invention provides a push-pull track-following servo system for a high-definition videodisc player where an accurate tracking error signal is obtained. Namely, a DC offset in the tracking error signal caused when the axis of a laser beam focused on a videodisc is moved is cancelled.

While the presently preferred embodiments of the present invention have been shown and described, it is to be understood that these disclosures are for the purpose of illustration and that various changes and modifications may be made without departing from the scope of the invention as set forth in the appended claim.

## Claims

1. A tracking error detecting system for a disc player in which laser beams are simultaneously focused to a plurality of tracks, said system comprising:
first photodetector means (9) including a pair of first detector elements (B1, B2) having the same detecting area and disposed side by side to receive a laser beam reflected from a disc,
second photodetector means (8, 10) including second detector elements (A1,C2 or A5, C6 or A7, C8), symmetrically disposed on either side of the first photodetector means (9) to receive reflected laser light,
tracking error signal producing means (12 - 15) including a first calculator (14) for calculating the difference between the outputs of each of said pair of detector elements (B1, B2),
characterized in that
the second detector elements (A1, C2) have a detecting area smaller than that of the first detector elements (B1, B2),
the tracking error signal producing means (12 - 15) further includes a second calculator (15) for calculating the difference between the outputs of said second detector elements (A1, C2) and a third calculator (13) for calculating the difference between the outputs of the first and second calculators (14, 15).

## Patentansprüche

1. Spurverfolgungsabweichungs-Feststellungssystem für ein Plattenabspielgerät, bei welchem Laserstrahlen gleichzeitig auf eine Vielzahl von Spuren fokussiert werden, wobei das System aufweist:
eine erste Photodetektoreinrichtung (9), die ein Paar erster Detektorelemente (B1, B2) umfaßt, welche die gleiche Detektorfläche haben und nebeneinander angeordnet sind, um einen von einer Platte reflektierten Laserstrahl zu empfangen,
eine zweite Photodetektoreinrichtung (8, 10), die zweite Detektorelemente (A1, C2; A5, C6; A7, C8) umfaßt, die symmetrisch auf beiden Seiten der ersten Photodetektoreinrichtung (9) angeordnet sind, um reflektiertes Laserlicht zu empfangen, und
eine Spurverfolgungsabweichungs-Signal-Erzeugungseinrichtung (12 bis 15), die einen ersten Rechner (14) zum Berechnen der Differenz zwischen den Ausgangsgrößen eines jeden des Paares von Detektorelementen (B1, B2) umfaßt,
dadurch gekennzeichnet, daß
die zweiten Detektorelemente (A1, C2) eine Detektorfläche haben, die kleiner ist als diejenige der ersten Detektorelemente (B1, B2), und
die Spurverfolgungsabweichungs-Signal-Erzeugungseinrichtung (12 bis 15) weiterhin einen zweiten Rechner (15) zum Berechnen der Differenz zwischen den Ausgangsgrößen der zweiten Detektorelemente (A1,C2) sowie einen dritten Rechner (13) zum Berechnen der Differenz zwischen den Ausgangsgrößen des ersten und des zweiten Rechners (14, 15) umfaßt.

## Revendications

1. Système de détection d'erreurs de piste pour lecteur de disques dans lequel des rayons laser sont simultanément focalisés sur une pluralité de pistes, ce système comprenant :
des premiers moyens photodétecteurs (9) comprenant une paire de premiers éléments détecteurs (B1,B2) ayant la même aire de détection et disposés côte-à-côte pour recevoir un rayon laser réfléchi depuis le disque,
des deuxièmes moyens photodétecteurs (8,10) comprenant des deuxièmes éléments détecteurs (A1,C2 ; A5,C6 ; A7,C8) disposés symétriquement de chaque côté des premiers moyens photodétecteurs (9) pour recevoir la lumière laser réfléchie,
des moyens de production de signaux d'erreurs de piste (12 - 15) comprenant un premier calculateur (14) pour calculer la différence entre les sorties de chacune des paires d'éléments détecteurs (B1,B2)
caractérisé en ce que
les deuxièmes éléments détecteurs (A1,C2) ont une aire de détection plus petite que celle des premiers éléments détecteurs (B1,B2),
les moyens de production de signaux d'erreurs de piste (12 - 15) comprennent en outre un deuxième calculateur (15) pour calculer la différence entre les sorties des deuxièmes éléments détecteurs (A1,C2) et un troisième calculateur (13) pour calculer la différence entre les sorties des premier et deuxième calculateurs (14,15).
